# EUROPEAN PATENT APPLICATION

(11) **EP 4 303 109 A1**
(43) Date of publication of application: **10.01.2024**
(21) Application number: 22182930.2
(22) Date of filing: 05.07.2022
(51) Int. Cl.: B62K 13/00, B61D 15/10, B62K 3/00, B61D 15/12

(54) **DRAISINE ADAPTOR**

(71) Applicant: Technical Environment Engelholm AB, 266 98 Hjärnarp (SE)
(72) Inventor: PURONRANTA, Ensio, 266 98 HJÄRNARP (SE); KARLSSON, Tobias, 266 97 HJÄRNARP (SE)
(74) Representative: Brann AB

(57) **Abstract**

A draisine adaptor (30) for driving an electric scooter (10) on a railroad is proposed. The scooter (10) has a front wheel (12) and a rear wheel (14) and the railroad has a first rail (32) and a second rail (34). The draisine adaptor (30) comprises: a frame (36) configured to be attached to the scooter (10), and a first wheel (38) rotationally connected to the frame (36). The frame (36) is configured to position the first wheel (38) on the second rail (34) at a positioning of the scooter (10) on the first rail (32) with the draisine adaptor (30) attached to the scooter (10).

## Description

### Technical field

The proposed technology relates generally to the field of draisines. Further, the proposed technology relates to the field of electric scooters.

### Background

A draisine is a light auxiliary rail vehicle, typically driven by service personnel, that can transport crew and material for inspection and maintenance of railway infrastructure. Inspection is typically performed over long distances and at remote locations, requiring the draisine to be transported off the rails. Maintenance of the draisine as such may also require the draisine to be transported off the rails.

Facilities for service personnel may be located rather distant from the railroad and travel between the facilities and the railroad may reduce the time available service or inspections. Thus, there is a need for reducing travel time to facilities off the rails.

An electric scooter is powered by a small electric motor. It is typically a two-wheeled vehicle and has a front wheel and a rear wheel. The front wheel is used for steering the scooter. The electric motor is usually a hub motor positioned in one of the wheels. The electric scooter can be a stand-up kick-scooter having a board on which the rider stands. The electric scooter may be fitted with a seat on which the rider can sit while driving. An electric scooter has a battery compartment holding a battery for supplying electric power to the electric motor. A common placement of the battery compartment is beneath the board on which the rider stands. The front wheel is connected to a handlebar by a fork and a stem allowing the rider to steer the electric scooter. Typically, the accelerator controlling the speed is positioned at one of the handles and a brake lever controlling the breaking is positioned at the other handle.

### Obj ect

It is an object of the proposed technology to provide a draisine that can be easily transported off the rails. It is a further object to provide a draisine that is safe to use. It is a further object to provide a draisine that is lightweight. It is a further object to enable an easy service of a draisine as such. It is a further object to enable service personnel to travel quickly off the rails.

### Summary

According to a first aspect of the proposed technology, a draisine adaptor for driving an electric scooter on a railroad is proposed. The scooter has a front wheel and a rear wheel, or front tire and a rear tire, and the railroad has a first rail and a second rail. The draisine adaptor comprises: a frame configured to be attached to the scooter and a first wheel rotationally supported by, or rotationally connected to, the frame. The frame is configured to position the first wheel on the second rail at a positioning of the scooter on the first rail with the draisine adaptor attached to the scooter, or with the draisine adaptor and the scooter forming a draisine or assembly.

According to a second aspect of the proposed technology, a draisine, or assembly, for driving on a railroad having a first rail and a second rail is proposed. The draisine or assembly, comprises: an electric scooter, wherein the scooter has a front wheel and a rear wheel, or front tire and a rear tire. The draisine further comprises: a draisine adaptor, wherein the draisine adaptor comprises: a frame attached to the scooter, and a first wheel rotationally supported by, or rotationally connected to, the frame. The frame is configured to position the first wheel on the second rail at a positioning of the scooter on the first rail. Worded differently, the draisine, or assembly, comprises an electric scooter and a draisine adaptor according to the first aspect of the proposed technology, wherein the scooter has a front wheel and a rear wheel, or front tire and a rear tire, and the frame of the draisine adaptor is attached to the scooter. It is understood that the draisine may have any of the features described in relation to the draisine adaptor.

For example, the first rail may be the left rail and the second rail may be the right rial relative to the forward direction of the scooter. It is understood that the positioning of the scooter on the first rail is during use. It is further understood that the scooter as such may have only two wheels. Worded differently, the scooter may be a two-wheeled scooter. It is further understood that, at a positioning of the scooter on the first rail, both the front wheel and the rear wheel of the scooter are positioned on, or engages, the first rail. It is further understood that both the front wheel and the rear wheel are oriented to rotate along, or traverse the scooter along, the railroad, or more precisely along the first rail. It is further understood that the first wheel is oriented to rotate along, or traverse the frame along, the railroad, or more precisely along the second rail. It is further understood that the front wheel, rear wheel, and the first wheel jointly carry the wight of the scooter and the draisine adaptor during use. It is further understood that the frame may extend between the first rail and the second rail, or from the scooter to the first wheel.

Separating the draisine adapter from the electric scooter contributes to an easier transport of the draisine as such off the rails. The fact that the electric scooter as such can be used for transport off the rails contributes to an easier transport of the disassembled draisine. Service also becomes easier, since it is primarily the electric scooter that requires service. For example, the electric scooter can be detached from the draisine adaptor and driven off the rails to an ordinary mains power outlet for recharging.

The first rail has an outer side facing away from the second rail and an inner side facing toward the second rail. Similarly, the second rail has an outer side facing away from the first rail and an inner side facing toward the first rail. Worded differently, each of the first and second rails has an outer side facing away from the other rail and an inner side facing toward the other rail.

The railroad may be for trains. Each of the first and second rails may have a head, a web, and a foot, wherein the head connects the head and the foot. It is understood that the wheels of a train contact the head of the rails.

The first wheel may be supported by, or connected to, the frame by a horizontal axle that is transverse to, or at a right angle to, the second rail. Worded differently, the first wheel may have a horizontal rotational axis that is transverse to, or at a right angle to, the second rail. Here, it is understood that the horizontal orientation is at the positioning of the scooter on the first rail.

The first wheel may have a tread with a concave profile. The concave profile may be configured to conform to the head of the second rail. This contributes to prevent, or inhibit, the first wheel from derailing, thus contributing to an improved security. The first wheel may be a double-flanged wheel. It is understood that the double-flanged wheel has a first flange and a second flange and that the first flange is configured to cooperate with, engage, or bias against, the inner side of the second rail and the second flange is configured to cooperate with, engage, or bias against, the outer side of the second rail to prevent a derailing in a direction away from and towards the first rail. It is further understood that the first and the second flanges may cooperate, engage, or bias against the head of the rail.

The draisine adaptor may comprise: a second wheel rotationally supported by, or rotationally connected to, the frame, wherein the frame is configured to position the second wheel on the second rail at a positioning of the scooter on the first rail with the draisine adaptor attached to the scooter, or with the draisine adaptor and the scooter forming a draisine or assembly. This allows for the draisine adaptor to carry heavier loads. The second wheel may be positioned behind the first wheel. It may be connected to the frame, or have a rotational axis, in the same manner as the first wheel.

The draisine adaptor may further comprise: one or more side supports supported by, or connected to, the frame and configured to cooperate with the head of the first rail and the second rail to prevent, or inhibit, a derailing. Different side supports are described below. The order in which they are presented is not to be construed as a limitation. For example, the draisine adaptor may comprise only the third, fourth, fifth, and sixth side supports described below.

The draisine adaptor may further comprise: a first side support supported by, or connected to, the frame and configured to cooperate with the outer side of the first rail to prevent, or inhibit, a derailing in a direction toward the second rail. Thus, the first side support contributes to an improved security.

The first side support may be configured to cooperate with the head of the first rail. The frame may position, or be configured to position, the first side support at a point between the front wheel and a midpoint, or center, between the front wheel and the rear wheel. Alternatively, the frame may position, or be configured to position, the first side support at, or at a point in front of, the front wheel. This way, the first side support is positioned to the forward left relative to the scooter.

The draisine adaptor may further comprise: a second side support supported by, or connected to, the frame and configured to cooperate with inner side of the first rail to prevent, or inhibit, a derailing in a direction away from the second rail. Thus, the second side support contributes to an improved security.

The second side support may be configured to cooperate with the head of the first rail. The frame may position, or be configured to position, the second side support at a point between the front wheel and a midpoint, or center, between the front wheel and the rear wheel. Alternatively, the frame may position, or be configured to position, the second side support at, or at a point in front of, the front wheel. This way, the second side support is positioned to the forward right relative to the scooter.

The separation between the first side support and the second side support transverse to, or at a right angle to, the first rail may be greater than width of the head of the first rail. This allows for a play between the side supports and the rails reducing friction during use. The first side support and the second side support may be positioned on opposite sides of the first rail. As mentioned above, the first side support and the second side support may be configured to cooperate with the first rail on the outer side and the inner side, respectively. The second side support may be positioned right across from the first side support relative to the first rail. Worded differently, the first side support and the second side support may be positioned at the same point, or location, along the first rail.

The draisine adaptor may further comprise: a third side support supported by, or connected to, the frame and configured to cooperate with the outer side of the first rail to prevent, or inhibit, a derailing in a direction toward the second rail. Thus, the third side support contributes to an improved security.

The third side support may be configured to cooperate with the head of the first rail. The frame may position, or be configured to position, the third side support at, or at a point behind, the front wheel. The frame may position, or be configured to position, the third side support at a point between the rear wheel and a midpoint, or center, between the front wheel and the rear wheel. Alternatively, the frame may position, or be configured to position, the third side support at, or at a point behind, the rear wheel. This way, the third side support is positioned to the rear left relative to the scooter.

The draisine adaptor may further comprise: a fourth side support supported by, or connected to, the frame and configured to cooperate with the inner side of the first rail to prevent, or inhibit, a derailing in a direction away from the second rail. Thus, the fourth side support contributes to an improved security.

The fourth side support may be configured to cooperate with the head of the first rail. The frame may position, or be configured to position, the fourth side support at, or at a point behind, the front wheel. The frame may position, or be configured to position, the fourth side support at a point between the rear wheel and a midpoint, or center, between the front wheel and the rear wheel. Alternatively, the frame may position, or be configured to position, the fourth side support at, or at a point behind, the rear wheel. This way, the fourth side support is positioned to the rear right relative to the scooter.

The separation between the third side support and the fourth side support transverse to, or at a right angle to, the first rail may be greater than width of the head of the first rail. This allows for a play between the side supports and the rails reducing friction during use. The third side support and the fourth side support may be positioned on opposite sides of the first rail. As mentioned above, the third side support and the fourth side support may be configured to cooperate with the first rail on the outer side and the inner side, respectively. The fourth side support may be positioned right across from the third side support relative to the first rail. Worded differently, the third side support and the fourth side support may be positioned at the same point, or location, along the first rail.

The draisine adaptor may further comprise: a fifth side support supported by, or connected to, the frame and configured to cooperate with the inner side of the second rail to prevent, or inhibit, a derailing in a direction away from the first rail. Thus, the fifth side support contributes to an improved security.

The fifth side support may be configured to cooperate with the head of the second rail. The frame may position, or be configured to position, the fifth side support at, or at a point in front of, the first wheel. This way, the fifth side support is positioned to the forward left relative to the first wheel. Alternatively, the frame may position, or be configured to position, the fifth side support at, or at a point behind, the first wheel. This way, the fifth side support is positioned to the rear left relative to the first wheel. The frame may position, or be configured to position, the fifth side support at a point between the first wheel and a midpoint, or center, between the first wheel and the second wheel.

The draisine adaptor may further comprise: a sixth side support supported by, or connected to, the frame and configured to cooperate with the outer side of the second rail to prevent, or inhibit, a derailing in a direction toward the second rail. Thus, the sixth side support contributes to an improved security.

The sixth side support may be configured to cooperate with the head of the second rail. The frame may position, or be configured to position, the sixth side support at, or at a point in front of, the second wheel. This way, the sixth side support is positioned to the forward right relative to the first wheel. Alternatively, the frame may position, or be configured to position, the sixth side support at, or at a point behind, the first wheel. This way, the sixth side support is positioned to the rear right relative to the first wheel. The frame may position, or be configured to position, the sixth side support at a point between the first wheel and a midpoint, or center, between the first wheel and the second wheel.

The separation between the fifth side support and the sixth side support transverse to, or at a right angle to, the second rail may be greater than width of the head of the second rail. This allows for a play between the side supports and the rails reducing friction during use. The fifth side support and the sixth side support may be positioned on opposite sides of the second rail. As mentioned above, the fifth side support and the sixth side support may be configured to cooperate with the second rail on the inner side and the outer side, respectively. The sixth side support may be positioned right across from the fifth side support relative to the second rail. Worded differently, the fifth side support and the sixth side support may be positioned at the same point, or location, along the second rail.

The draisine adaptor may further comprise: a seventh side support supported by, or connected to, the frame and configured to cooperate with the inner side of the second rail to prevent, or inhibit, a derailing in a direction away from the first rail. Thus, the seventh side support contributes to an improved security.

The seventh side support may be configured to cooperate with the head of the second rail. The frame may position, or be configured to position, the seventh side support at, or at a point behind, the first wheel. The frame may position, or be configured to position, the seventh side support at, or at a point in front of, the second wheel. This way, the seventh side support is positioned to the forward left relative to the second wheel. Alternatively, the frame may position, or be configured to position, the seventh side support at, or at a point behind, the second wheel. This way, the seventh side support is positioned to the rear left relative to the second wheel. The frame may position, or be configured to position, the seventh side support at a point between the second wheel and a midpoint, or center, between the first wheel and the second wheel.

The draisine adaptor may further comprise: an eighth side support supported by, or connected to, the frame and configured to cooperate with the outer side of the second rail to prevent, or inhibit, a derailing in a direction toward the first rail. Thus, the eighth side support contributes to an improved security.

The eighth side support may be configured to cooperate with the head of the second rail. The frame may position, or be configured to position, the eighth side support at, or at a point behind, the first wheel. The frame may position, or be configured to position, the eighth side support at, or at a point in front of, the second wheel. This way, the eighth side support is positioned to the forward right relative to the second wheel. Alternatively, the frame may position, or be configured to position, the eighth side support at, or at a point behind, the second wheel. This way, the eighth side support is positioned to the rear right relative to the second wheel. The frame may position, or be configured to position, the eighth side support at a point between the second wheel and a midpoint, or center, between the first wheel and the second wheel.

The separation between the seventh side support and the eighth side support transverse to, or at a right angle to, the second rail may be greater than width of the head of the second rail. This allows for a play between the side supports and the rails reducing friction during use. The seventh side support and the eighth side support may be positioned on opposite sides of the second rail. As mentioned above, the seventh side support and the eighth side support may be configured to cooperate with the second rail on the inner side and the outer side, respectively. The eighth side support may be positioned right across from the seventh side support relative to the second rail. Worded differently, the seventh side support and the eighth side support may be positioned at the same point, or location, along the second rail.

The profile, or cross section, of the rail may have a highest point. Each of the abovementioned side supports may extend downward relative to, or below, the highest point. If the second and/or fourth side supports are present, they may extend further down relative to the highest point than the first and/or the third side support if these are present. Similarly, if the fifth and/or seventh side supports are present, they may extend further down relative to the highest point than the sixth and/or the eighth side support if these are present. Worded differently, side supports configured to cooperate with the inner side of the first rail and the second rail may extend further down relative to the highest point than side supports configured to cooperate with the outer side of the first rail and the second rail.

For example, the draisine may have four side supports in total. It may comprise: the abovementioned first to fourth side support in combination with the first wheel being concave. In another example, it has three sides supports in total, namely the first, third, and sixth side support.

Any of the abovementioned side supports may form a contact surface fixed in relation to the frame and configured to engage, or bias against, the head of the rail it is configured to cooperate with. The side support may comprise: a flange fixed to the frame and forming the contact surface. The contact surface, or the flange, may be planar. The contact surface, or the flange, may be vertical. The contact surface, or the flange, may be parallel, or tangential, with the rail. The contact surface, or flange, may extend downwards from the frame.

As mentioned above, the profile, or cross section, of the rail may have a highest point. The contact surface, or flange, may extend downward relative to, or below, the highest point. The contact surface, or flange, may have a downward extension relative to the highest point that is greater than 10 mm or 15 mm. The downward extension relative to the highest point may be smaller than 25 mm or 30 mm. This contributes to a secure support and to allow passage in some railroad switches. The flange may have a thickness that is less than 5 mm, or less than 3 mm, at the rail, which also contributes to allow passage in some railroad switches.

Any of the abovementioned side supports may comprise: a support wheel rotationally supported by, or rotationally connected to, the frame and configured to engage, or bias against, the head of the rail it is configured to cooperate with.

The support wheel may be connected to the frame by an axle that is at a right angle to rail that the side support is configured to cooperate with. Worded differently, the support wheel may have a rotational axis that is at a right angle to rail. This means that the axle or axis is in a plane that is transverse to, or at a right angle to, the rail. It is understood that this is during use.

As mentioned above, the profile, or cross section, of the rail may have a highest point. The support wheel may extend downward relative to, or below, the highest point.

The support wheel may be supported by, or connected to, the frame by a vertical axle. Worded differently, the support wheel may have a vertical rotational axis. Here, it is understood that the first and second rails are horizontally coplanar at the positioning of the scooter on the first rail, or at a positioning of the draisine or assembly on the railroad.

The support wheel may have a downward extension relative to the highest point that is greater than 20 mm or 30 mm. The downward extension relative to the highest point may be smaller than 40 mm or 50 mm. This contributes to a secure support. The width of the support wheel may be in the range 30 mm to 40 mm. It may have a radius in the range 45 mm to 60 mm. The support wheel may have a tread with a flat profile. For example, the support wheel may be a skateboard wheel.

The support wheel may be supported by, or connected to, the frame by an axle defining an angle to the vertical, or to a vertical plane parallel with the first or second rail, that is greater than 15° or 30° and smaller than 45° or 60°. Worded differently, the support wheel may have a rotational axis defining an angle to the vertical that is in the range 15-45°, 15-60°, 30-45°, or 30-60°. Here, it is understood that the first and second rails are horizontally coplanar at the positioning of the scooter on the first rail or at a positioning of the draisine or assembly on the railroad.

The support wheel may have a downward extension relative to the highest point that is greater than 5 mm or 10 mm. The downward extension relative to the highest point may be smaller than 15 mm. This contributes to a secure support and to allow passage in some railroad switches. The width of the support wheel may be in the range 20 mm to 30 mm. It may have a radius in the range 70 mm to 120 mm. The support wheel may have a tread with a curved convex profile. For example, the support wheel may be an inline wheel. This contributes to allow passage in some railroad switches.

The abovementioned first side support may be configured to cooperate with the inner side of the first rail to prevent, or inhibit, a derailing in a direction away from the second rail. Similarly, the abovementioned third side support may be configured to cooperate with the inner side of the first rail to prevent, or inhibit, a derailing in a direction away from the second rail. Similarly, the abovementioned fifth side support may be configured to cooperate with the outer side of the second rail to prevent, or inhibit, a derailing in a direction toward the first rail. Similarly, the seventh side support may be configured to cooperate with the outer side of the second rail to prevent, or inhibit, a derailing in a direction toward the first rail.

The support wheel may have a tread with a concave profile. The concave profile may be configured to conform to the head of the second rail. This prevents, or inhibits, the support wheel from derailing. The support wheel may be a double-flanged wheel. It is understood that the double-flanged wheel has a first flange and a second flange and that the first flange is configured to cooperate, or engage, or bias against, one side of the rail and that the second flange is configured to cooperate, or engage, or bias against, the other side of the rail. It is further understood that the first and the second flanges may cooperate, engage, or bias against the head of the rail.

The support wheel may be supported by, or connected to, the frame by a horizontal axle. Worded differently, the support wheel may have a horizontal rotational axis. Here, it is understood that the first and second rails are horizontally coplanar at the positioning of the scooter on the first rail, or at a positioning of the draisine or assembly on the railroad.

For Example, the draisine adapter may have the first, second, fifth, and sixth side supports, wherein each of the first and sixth side supports comprises a support wheel and each of the second and fifth side supports comprises a flange.

The scooter may be an electric kick scooter. The scooter may be configured to start, or activate, by the driver pushing the scooter forward, for example by a kicking against a crosstie between the first rail and the second rail. The scooter may comprise a board, deck, or kick stand. It is understood that a driver or rider can stand on the board while driving. The board may be a double board allowing the rider to stand on the board with both feet in parallel. The scooter may further comprise a battery compartment located beneath the board.

The frame may comprise a scooter mount, or scooter attachment, configured to attach the frame, or the draisine adaptor, to the scooter. It is understood that the scooter mount is located at the scooter during use. The scooter mount may be configured to engage, or contact, the scooter below and above the battery compartment. It may be configured to engage, or contact, the scooter at the board. The scooter mount may engage, or contact, the scooter between the front wheel and the rear wheel. It is understood that in the second aspect of the proposed technology, the scooter mount may be attached, engage, or contact the scooter.

The frame, or the draisine adaptor, may be configured to be releasably attached to the scooter. The scooter mount may be configured to releasably attach the frame, or the draisine adaptor, to the scooter. For example, the frame or the scooter mount may comprise: manually operated fasteners providing the attachment. Here, a manually operated fastener is understood as a fastener that can be operated without any tools. It is understood that in the second aspect of the proposed technology, the frame or the scooter mount may be releasably attached to the scooter.

The frame may comprise: a transverse rig, or transverse structure, configured to extend from, or extending from, the scooter to the first wheel. Worded differently, the transverse rig may be configured to extend from a point at the first rail to a point at the second rail. The first wheel, and if present the second wheel, may be rotationally supported by, or rotationally connected to, the transverse rig.

The frame, or the transverse rig, may be configured to allow for the driver or rider to kick at the ground between the first rail and the second rail while standing on the board of the scooter. It is understood that this is during use.

The transverse rig may be in front of the rear wheel at the scooter. The board of the scooter may have a front end and a rear end. The transverse rig may be in front of the rear end at the board. The transverse rig may be at or in front of the midpoint between the rear end and the front end. In the first aspect of the proposed technology, the transverse rig may be configured to have the specified positions.

The transverse rig may be attached to the scooter mount. It may be attached to the scooter mount in front of the rear wheel. It is understood that the attachment is at the scooter. As mentioned above, the board of the scooter may have a front end and a rear end. The transverse rig may be attached to the scooter mount in front of the rear end at the board, at the midpoint between the rear end and the front end, or in front of the midpoint between the rear end and the front end. It is understood that this is during use. In the first aspect of the proposed technology, the transverse rig may be configured to achieve these positions.

The transverse rig may be located at an elevation above the first rail and the second rail during use. This allows for a passage in a railroad switch. The transverse rig may be located at an elevation below the board of the scooter, or below the battery compartment of the scooter. This allows for the transverse rig to be used as a step when climbing from between the rails onto the scooter. In the first aspect of the proposed technology, the transverse rig may be configured to achieve these positions.

The frame may have, or form, a loading area between the scooter and the first wheel. For example, the loading area may be for carrying cargo or a passenger. The loading area may be horizontal. Here, it is understood that the horizontal orientation is at the positioning of the scooter on the first rail. In the first aspect of the proposed technology, the loading area may be configured to achieve the specified positions.

The loading area may be configured to allow for the driver or rider to kick at the ground between the first rail and the second rail while standing on the board of the scooter. The loading area may be in front of the rear wheel at the scooter. As mentioned above, the board of the scooter may have a front end and a rear end. The loading area may be in front of the rear end at the board. The loading area may be at or in front of the midpoint between the rear end and the front end. It is understood that the attachment is at the scooter. In the first aspect of the proposed technology, the loading area may be configured to achieve the specified positions.

The loading area may be located at an elevation above the first rail and the second rail during use. This allows for a passage in a railroad switch. The loading area may be located at an elevation below the board of the scooter, or below the battery compartment of the scooter. This allows for the loading area to be used as a step when climbing from between the rails onto the scooter. In the first aspect of the proposed technology, the loading area may be configured to achieve the specified positions.

Alternatively, the loading area may be located at the same level, or elevation, as the board of the scooter. This allows for the loading area to be used as an extension of the board wile driving, or the board to be used as an extension of the loading area.

The draisine adaptor may comprise: a planar deck, or plate, positioned on top of and attached to the transverse rig, wherein the planar deck forms, or defines, the loading area.

It is understood that the front wheel of the scooter is a steering wheel. The scooter may have a fork. It is understood that the front wheel is rotationally connected to the fork. The draisine adaptor may comprise: a wheel lock, or clamp, configured to prevent the front wheel of the scooter from turning sideways relative to the first rail. The wheel lock may be attached to the frame. The wheel lock may engage, or bias against, the fork of the scooter. In the second aspect of the proposed technology, the wheel lock may prevent the front wheel from turning, or it may engage, or bias against, the fork.

### Brief description of the drawings

A more complete understanding of the abovementioned and other features and advantages of the proposed technology will be apparent from the following detailed description of preferred embodiments in conjunction with the appended drawings, wherein:
- Figs. 1a and b: schematically illustrate a top view and a side view, respectively, of an electric scooter,
- Figs. 2a, 2b, and 2c: schematically illustrate a top view, a side view, and a cross sectional front view, respectively, of an embodiment of a draisine,
- Fig. 3a and 3b: schematically illustrate front views of wheels for a draisine adaptor that can be used in the embodiment of Figs 2a to 2c,
- Fig. 4a to 4d: schematically illustrate front views of side supports for a draisine adaptor that can be used in the embodiment of Figs 2a to 2c,
- Figs. 5a and 5b: schematically illustrate a top view and a cross sectional front view, respectively, of an alternative embodiment of a draisine,
- Fig. 6a and 6b: schematically illustrate front views of wheels for a draisine adaptor that can be used in the embodiment of Figs 5a and 5b, and
- Fig. 7a to 7d: schematically illustrate front views of side supports for a draisine adaptor that can be used in the embodiment of Figs 5a and 5b.

### Description of the drawings

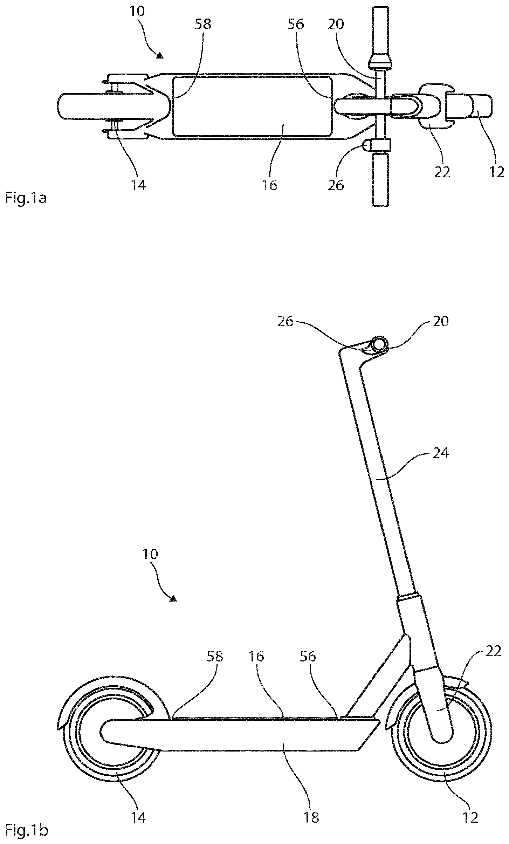

A top view and a side view an electric scooter 10 are shown in Figs. 1a and b. The scooter 10 has a front wheel 12 and a rear wheel 14. An electric hub motor (not shown) is positioned in the front wheel 12 that powers the scooter 10. The electric scooter 10 is a stand-up kick-scooter and has a board 16 on which a rider can stand. The board 16 is a double board allowing the rider to stand with both feet in parallel on the board 16. In alternative embodiments, the electric scooter is fitted with a seat on which the rider can sit. The scooter 10 has a battery compartment 18 beneath the board 16 holding a battery (not shown) for supplying electric power to the electric motor (not shown). The scooter 10 is activated by the driver pushing the scooter 10 forward. The front wheel 12 is a steering wheel and is connected to a handlebar 20 by a fork 22 and a stem 24. An accelerator 26 controlling the speed of the scooter 10 is positioned at one of the handles and a brake lever (not shown) controlling the breaking of the scooter 10 is positioned at the other handle.

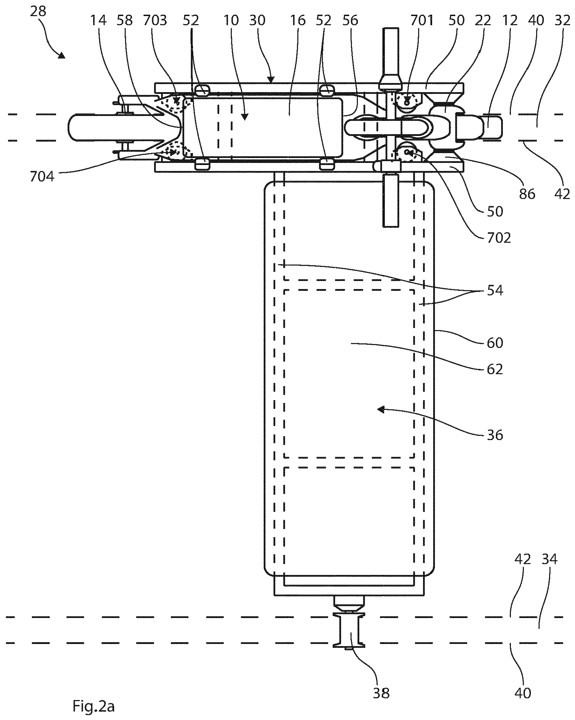

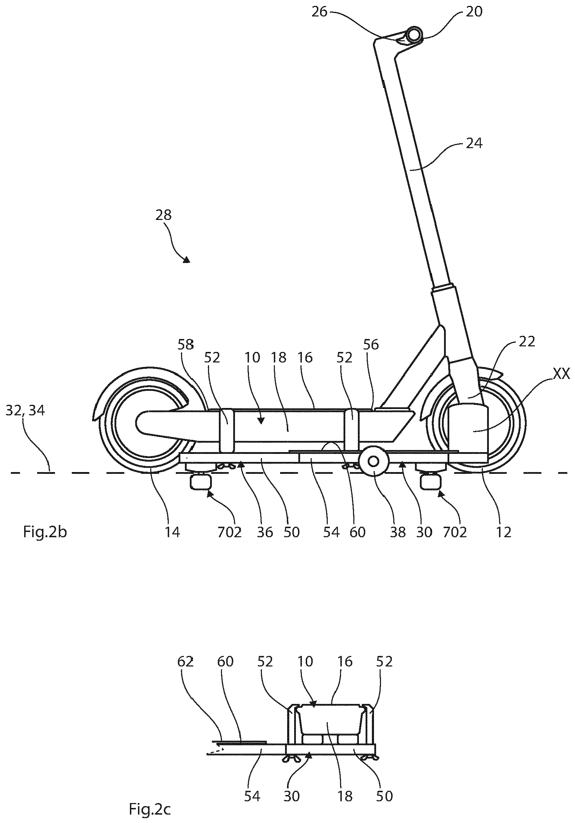

A top view, a side view, and a cross sectional front view of an embodiment of a draisine 28 positioned on a train railroad having a first rail 32 and a second rail 34 is shown in Figs. 2a to 2c. The first rail 32 and a second rail 34 are coplanar, straight, and horizontal. The draisine 28 is composed of a scooter 10 and a draisine adaptor 30. Draisine adaptor 30 has a frame 36 that is releasably attached to the scooter 10 and a first wheel 38 that is rotationally connected to the frame 36. When the front wheels 12 and the rear wheel 14 of the scooter 10 are positioned on the first rail 32, the frame 36 positions the first wheel 38 on the second rail 34.

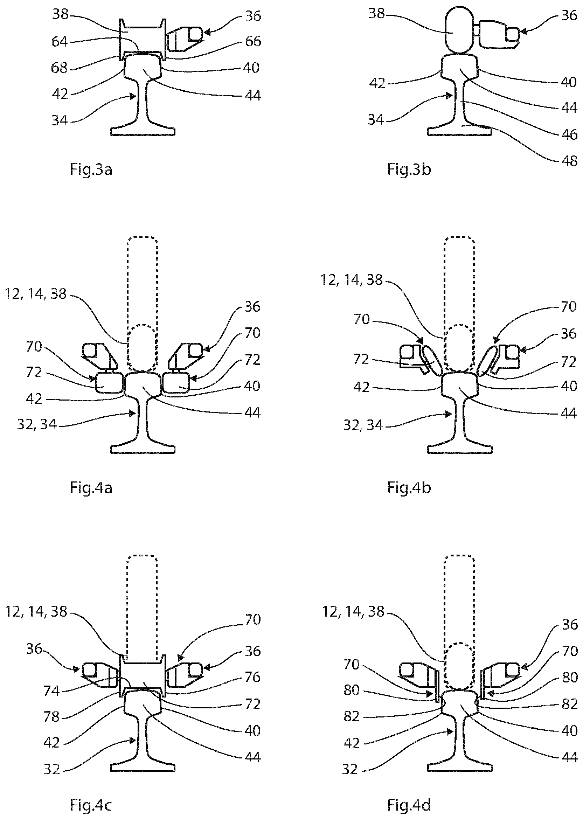

In Fig. 2a, the first rail 32 is the left rail and the second rail 34 is the right rial relative to the forward direction of the scooter 10. Each of the first rail 32 and second rail 34 has an outer side 40 facing away from the other rail and an inner side 42 facing toward the other rail. Each rail 32 and 34 has a head 44 and a foot 48 that are connected by a web 46, see Fig. 3b.

The frame 36 has a scooter mount 50 that engages the scooter 10 below and above the battery compartment 18 and between the front wheel 12 and the rear wheel 14. The scooter mount 50 has manually operated fasteners 52 that releasably attaches the frame 36 to the scooter 10. This way, the draisine adaptor 30 is also releasably attached to the scooter 10.

The frame 36 has a transverse rig 54 that extends from the scooter 10 to the first wheel 38. This means that it extends from a point at the first rail 32 to a point at the second rail 34. The board 16 has a front end 56 and a rear end 58 and the transverse rig 54 is attached to the scooter mount 50 in front of the midpoint between the rear end 58 and the front end 56 of the board 16. This means that the transverse rig 54 is attached to the scooter mount 50 in front of the rear wheel 14 at the scooter 10. With this positioning of the transverse rig 54, the transverse rig 54 is configured such that the rider can use his right foot to kick at the ground between the first 32 rail and the second rail 34 while standing on the board 16 of the scooter 10 with his left foot. The transverse rig 54 is located at an elevation above the first rail 32 and the second rail 34 and below the battery compartment 18 of the scooter 10, see Fig. 2c.

The draisine adaptor 30 has a horizontal planar deck 60 positioned on top of and attached to the transverse rig 54. The planar deck 60 forms a loading area 62 on which cargo or a passenger can be carried. As with the transverse rig 54, the loading area 62 is in front of the midpoint between the rear end 58 and the front end 62 of the board 16 at the scooter 10 and its elevation is between the first rail 32 and the battery compartment 18 of the scooter 10.

The first wheel 38 is rotationally connected to the transverse rig 54, and in extension to the frame 36, by a horizontal axle (not indicated) that is at a right angle to the second rail 34. A front view of the first wheel 38 is shown in Fig. 3a. The first wheel 38 has tread 64 with a concave profile that conforms to the head 44 of the second rail 34. It is a double-flanged wheel engaging the head 44 of the second rail 34 with a first flange 66 and a second flange 68 that can engage the inner side 42 and the outer side 40, respectively, of the second rail 34. An alternative embodiment of a first wheel 38 is shown in Fig. 3b having a convex profile.

The draisine adaptor 30 has four side supports 70 connected to the frame 36 and that cooperates with the head 44 of the first rail 32 to prevent the draisine 28 from derailing. The first side support 701 can engage the outer side 40 of the first rail 32 and is position at a point between the front wheel 12 and a midpoint between the front wheel 12 and the rear wheel 14. The second side support 702 can engage the inner side 42 of the first rail 32 and is position right across from the first side support 701 relative to the first rail 32. The third side support 703 can engage the outer side 40 of the first rail 32 and is position at a point between the rear wheel 14 and a midpoint between the front wheel 12 and the rear wheel 14. The fourth side support 704 can engage the inner side 42 of the first rail 32 and is position right across from the third side support 703 relative to the first rail 32.

The draisine adaptor 30 has a wheel lock 86 in the form of a clamp that engages the fork 22 of the scooter 10 on both sides of the scooter 10 and prevents the wheel 12 from turning sideways.

Front views of different embodiments of side supports 70 are shown in Figs. 4a to 4d, in which the front wheel 12, rear wheel 14, or first wheel 38 is indicated in dashed lines. The side supports 70 of the draisine embodiment of Figs. 2a to 2c is shown in Fig. 4a. Any of these can be replaced by any of the side supports 70 in Figs. 4b to 4d.

Fig. 4a shows two side supports 70 engaging the outer side 40 and the inner side 42 of the first or second rail 32 or 34. Each side support 70 has a support wheel 72 rotationally connected to the frame 36 by an axle (not indicated). The support wheels 72 engages the head 44 of the rail 32 or 34 on the outer side 40 or the inner side 42 at sideways movements of the draisine 28, thus preventing derailing. The axle (not indicated) is vertical, which means this it is at a right angle to rail 32 and 34. The support wheel 70 is a skateboard wheel and extends downward relative to the highest point of the rail 32 or 34 by more than 30 mm and less than 50 mm.

Fig. 4b shows two side supports 70 of a different type engaging the outer side 40 and the inner side 42 of the first or second rail 32 or 34. Each side support 70 has a support wheel 72 rotationally connected to the frame 36 by an axle (not indicated). The support wheels 72 engages the head 44 of the rail 32 or 34 on the outer side 40 or the inner side 42 at sideways movements of the draisine 28, thus preventing derailing. The axle (not indicated) has an angle of 45° to a vertical plane parallel with the rail 32 or 34. The support wheel 70 is an inline wheel and extends downward relative to the highest point of the rail 32 or 34 by more than 5 mm and less than 15 mm.

Fig. 4c shows a side support 70 of a different type with a support wheel 38 having a tread 74 with a concave profile that conforms to the head 44 of the first rail 32. It is a double-flanged wheel with a first flange 76 and a second flange 78 that can respectively engage the head 44 of the first rail 32 on the outer side 40 and the inner side 42. The support wheel 72 is rotationally connected to the frame 36 by a horizontal axle (not indicated) that is perpendicular to the first rail 32. The side support 70 can be arranged to cooperate in an analogous manner with the second rail 34.

Fig. 4d shows two side supports 70 of a different type engaging the outer side 40 and the inner side 42 of the first rail 32. Each side support 70 has a flange 80 fixed to the frame 36 that forms a contact surface 82 that can slide along the head 44. The flange 80 engages the head 44 of the rail 32 on the outer side 40 or the inner side 42 at sideways movements of the draisine 28, thus preventing derailing. The contact surface 82 is planar, vertical, and parallel with the rail 32. The contact surface 82 extends downward relative to the highest point of the rail 32. The flange 80 has a thickness of 2.5 mm at the rail 32. The contact surface 82 on the outer side 40 extends downward by 15 mm and the contact surface 82 on the inner side 42 extends downward by 25 mm. This means that the side support 70 that cooperates with the inner side 42 of the rail 32 extend further down relative to the highest point of the rail 32 or 34 than the side support 70 that cooperates with the outer side 40, thus compensating for the greater wear that is typical on the inner side 42. The side support 70 can be arranged to cooperate in an analogous manner with the second rail 34.

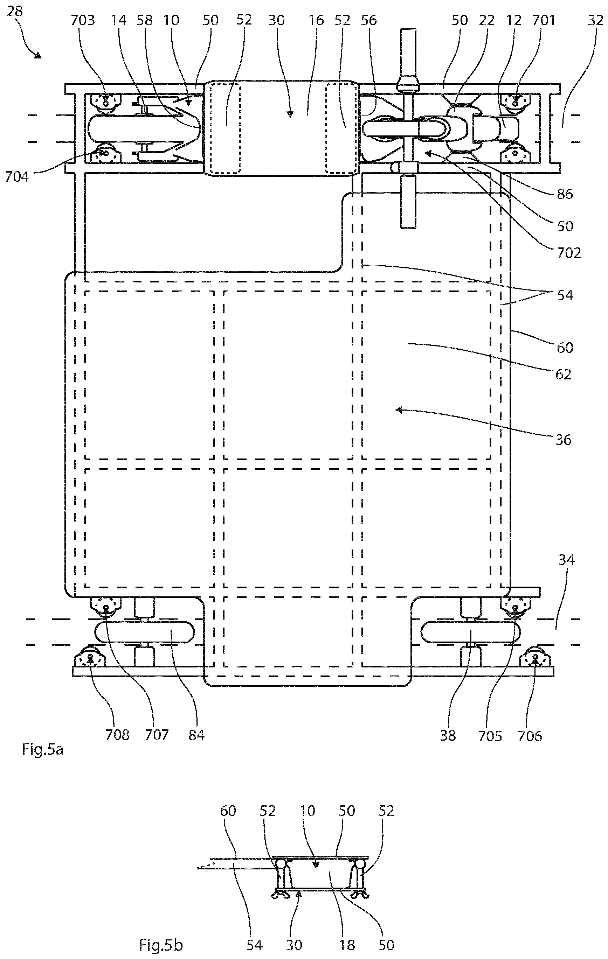

A top view and a cross sectional front view of another embodiment of a draisine 28 is shown in Figs. 5a and 5b. This embodiment differs from the embodiments of Figs. 2a to 2c by the transverse rig 54 being attached to the scooter mount 50 in front of the front end 56 of the board 16 and behind the rear end 58 of the board 16, more precisely behind the rear wheel 14. As can be seen in Fig. 5a, the transverse rig 54 is configured such that the rider can use his right foot to kick at the ground between the first 32 rail and the second rail 34 while standing on the board 16 of the scooter 10 with his left foot. Furthermore, the transverse rig 54 is located at the same elevation as the board 16 of the scooter 10. This way, the loading area 62 of the horizontal planar deck 60 is also at the same elevation as the board 16. The fasteners 52 has been adapted for this higher elevation, which is shown in Figs. 5a and 5b.

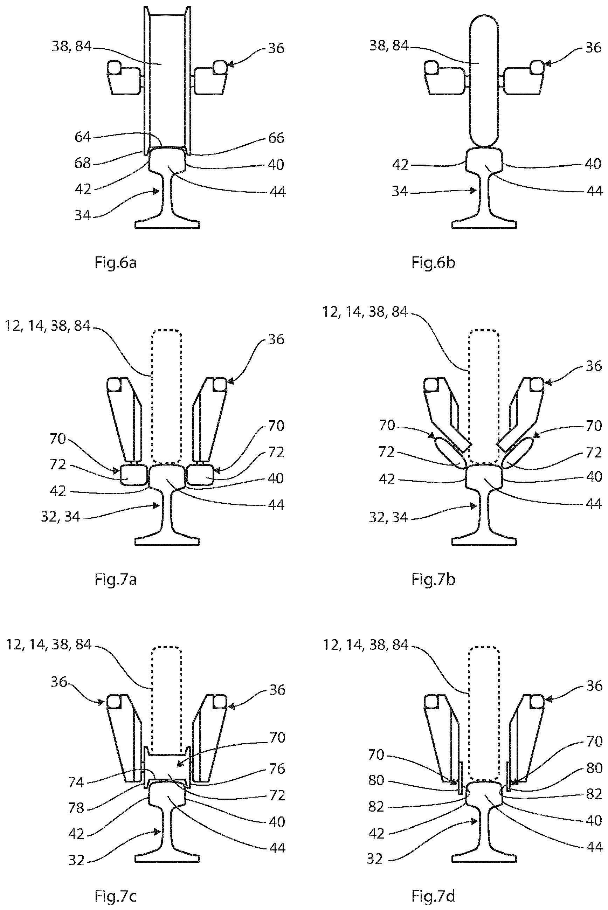

The draisine adaptor 30 further has a second wheel 84 connected to the transverse rig 54, and in extension to the frame 36, by a horizontal axle (not indicated) that is at a right angle to the second rail 34. The second wheel 84 is positioned behind the first wheel 38. The first wheel 38 and the second wheel 84 both have a convex profile, as illustrated in Fig. 6b.

An alternative embodiment of the first wheel 38 and the second wheel 84 is shown in Fig. 6a. It corresponds to the first wheel described in relation to Fig. 4a but has a greater diameter to accommodate for the higher position of the transverse rig 54.

The first side support 701 and the second side support 702 are positioned at the front wheel 12, and the third side support 703 and the fourth side support are positioned at the rear wheel. The draisine adaptor 30 additionally has four side supports 70 connected to the transverse rig 54, and in extension to the frame 36, that cooperates with the head 44 of the second rail 34 to prevent the draisine 28 from derailing. The fifth side support 705 can engage the inner side 42 of the second rail 34 and is position in front of the first wheel 38. The sixth side support 706 can engage the outer side 40 of the second rail 34 and has a forward position relative to the fifth side support 705. The seventh side support 707 can engage the inner side 42 of the second rail 34 and is position behind the second wheel 84, which means that it is also positioned behind the first wheel 38. The eighth side support 708 can engage the outer side 44 of the second rail 34 and has a rearward position relative to the seventh side support 707.

Front views of different embodiments of side supports 70 are shown in Figs. 6a to 6d, in which the front wheel 12, rear wheel 14, first wheel 38, or second wheel 84 is indicated in dashed lines. The side supports 70 of the draisine embodiment of Figs. 5a and 5b is shown in Fig. 6a. Any of these can be replaced by any of the side supports 70 in Figs. 6b to 6d. The side supports of Figs. 6a to 6d correspond to the side supports described in relation to Figs. 4a to 4d but has been adapted to accommodate for the higher position of the transverse rig 54.

### Item list

- 10: electric scooter
- 12: front wheel
- 14: rear wheel
- 16: board
- 18: battery compartment
- 20: handlebar
- 22: fork
- 24: stem
- 26: accelerator
- 28: draisine
- 30: draisine adaptor
- 32: first rail
- 34: second rail
- 36: frame
- 38: first wheel
- 40: outer side
- 42: inner side
- 44: head
- 46: web
- 48: foot
- 50: scooter mount
- 52: fasteners
- 54: transverse rig
- 56: front end of board
- 58: rear end of board
- 60: planar deck
- 62: loading area
- 64: tread of first wheel
- 66: first flange of first wheel
- 68: second flange of first wheel
- 70: side support
- 701: first side support
- 702: second side support
- 703: third side support
- 704: fourth side support
- 705: fifth side support
- 706: sixth side support
- 707: seventh side support
- 708: eighth side support
- 72: support wheel
- 74: tread of support wheel
- 76: first flange of support wheel
- 78: second flange of support wheel
- 80: flange
- 82: contact surface
- 84: second wheel
- 86: wheel lock

## Claims

1. A draisine adaptor (30) for driving an electric scooter (10) on a railroad, wherein the scooter (10) has a front wheel (12) and a rear wheel (14), the railroad has a first rail (32) and a second rail (34), and the draisine adaptor (30) comprises:
- a frame (36) configured to be attached to the scooter (10), and
- a first wheel (38) rotationally connected to the frame (36),
wherein the frame (36) is configured to position the first wheel (38) on the second rail (34) at a positioning of the scooter (10) on the first rail (32) with the draisine adaptor (30) attached to the scooter (10)

2. The draisine adaptor (30) according to claim 1, wherein the first wheel (38) has a tread (64) with a concave profile.

3. The draisine adaptor (30) according to claim 1 or 2, wherein the first rail (32) has an outer side (40) facing away from the second rail (34) and an inner side (42) facing toward the second rail (34), and the draisine adaptor (30) further comprises:
- a first side support (701) supported by the frame (36) and configured to cooperate with the outer side (40) of the first rail (32) to prevent a derailing in a direction toward the second rail (34).

4. The draisine adaptor (30) according to claim 3, wherein the frame (36) is be configured to position the first side support (701) at a point between the front wheel (12) and a midpoint between the front wheel (12) and the rear wheel (14) .

5. The draisine adaptor (30) according to claim 3 or 4, wherein the draisine adaptor (30) further comprises:
- a second side support supported by the frame (36) and configured to cooperate with inner side (42) of the first rail (32) to prevent a derailing in a direction away from the second rail (34), wherein the frame (36) is configured to position the second side support at a point between the front wheel (12) and a midpoint between the front wheel (12) and the rear wheel (14).

6. The draisine adaptor (30) according to claim 5, wherein the draisine adaptor (30) further comprises:
- a third side support supported by the frame (36) and configured to cooperate with the outer side (40) of the first rail (32) to prevent a derailing in a direction toward the second rail (34), wherein the frame (36) is configured to position the third side support at a point between the rear wheel (14) and a midpoint, or center, between the front wheel (12) and the rear wheel (14), and
- a fourth side support supported by the frame (36) and configured to cooperate with the inner side (42) of the first rail (32) to prevent a derailing in a direction away from the second rail (34), wherein the frame (36) is configured to position the fourth side support at a point between the rear wheel (14) and a midpoint between the front wheel (12) and the rear wheel (14).

7. The draisine adaptor (30) according to claim 3 or 4, wherein the first rail (32) has a head (44), a web (46), and a foot (48), and the first side support (701) comprises:
- a flange (80) fixed to the frame (36) and forming a contact surface (82) fixed in relation to the frame (36) and configured to engage the head (44) of the rail.

8. The draisine adaptor (30) according to claim 3 or 4, wherein the first rail (32) has a head (44), a web (46), and a foot (48), and the side supports comprises:
- a support wheel (72) rotationally connected to the frame (36) and configured to engage the head (44) of the first rail (32) .

9. The draisine adaptor (30) according to claim 8, wherein the support wheel (72) is connected to the frame (36) by a vertical axle.

10. The draisine adaptor (30) according to any of the claims 1 to 9, wherein the frame (36) comprises:
- a scooter mount (50) configured to releasably attach the frame (36) to the scooter (10).

11. The draisine adaptor (30) according to claim 10, wherein the frame (36) comprises:
- a transverse rig (54) attached to the scooter mount (50) and extending from the scooter (10) to the first wheel (38), wherein the transverse rig (54) is configured to allow for a rider to kick at the ground between the first rail (32) and the second rail (34) while standing on the board (16) of the scooter (10).

12. The draisine adaptor (30) according to claim 11, wherein the scooter (10) comprises a board (16) and a battery compartment (18) located beneath the board (16), and the transverse rig (54) is located at an elevation above the first rail (32) and the second rail (34) and below the battery compartment (18) of the scooter (10) during use.

13. The draisine adaptor (30) according to any of the claims 1 to 12, wherein the draisine adaptor (30) comprises:
- a wheel lock (86) configured to prevent the front wheel (12) of the scooter (10) from turning sideways relative to the first rail (32).

14. A draisine (28) for driving on a railroad having a first rail (32) and a second rail (34), wherein the draisine (28) comprises:
- an electric scooter (10), wherein the scooter (10) has a front wheel (12) and a rear wheel (14), and
- a draisine adaptor (30) comprising:
- a frame (36) attached to the scooter (10), and
- a first wheel (38) rotationally connected to the frame (36),
wherein he frame (36) is configured to position the first wheel (38) on the second rail (34) at a positioning of the scooter (10) on the first rail (32).

15. The draisine (28) according to claim 14, wherein the draisine adaptor (30) further comprises any of the features of claims 1 to 13.
